# NEUE EUROPÄISCHE PATENTSCHRIFT

(11) **EP 1 559 537 B2**
(45) Veröffentlichungstag und Bekanntmachung des Hinweises auf die Entscheidung über den Einspruch: **07.12.2022**
(45) Hinweis auf die Patenterteilung: 05.11.2014
(21) Anmeldenummer: 04001936.6
(22) Anmeldetag: 29.01.2004
(51) Int. Cl.: B29C 47/00, B32B 1/08, B32B 27/34, B32B 27/30, F16L 9/12, F16L 11/04, B60K 15/00, B29C 47/06

(54) **Mehrschichtiges Kunststoffrohr mit Barriereeigenschaften**
Multilayer plastic pipe with barrier properties
Tuyau multicouche en plastique à propriété barrière

(43) Veröffentlichungstag der Anmeldung: 03.08.2005
(73) Patentinhaber: TI Automotive (Fuldabrück) GmbH, 34277 Fuldabrück (DE)
(72) Erfinder: Fahrenholz, Frank, 34128 Kassel (DE); Zimmer, Werner, 34212 Melsungen (DE)
(74) Vertreter: Andrejewski - Honke Patent- und Rechtsanwälte Partnerschaft mbB

(56) Entgegenhaltungen:
- EP-A- 0 637 509
- EP-A- 0 650 004
- EP-A- 1 162 061
- EP-A- 1 216 826
- EP-A1- 0 559 445
- EP-A1- 0 601 295
- EP-A2- 0 673 762
- WO-A1-03/028995
- DE-A- 3 510 395
- DE-C- 3 827 092

## Beschreibung

Die Erfindung betrifft ein mehrschichtiges Kunststoffrohr, insbesondere eine mehrschichtige Kraftfahrzeugrohrleitung. - Kraftfahrzeugrohrleitungen meint Rohrleitungen, die in Kraftfahrzeugen installiert werden. Es handelt sich dabei vor allem um Kraftstoffleitungen oder aber beispielsweise um Leitungen für die Bremsflüssigkeit. Der Begriff Kunststoffrohr umfasst im Übrigen auch einen Schlauch bzw. eine Schlauchleitung. Durch das erfindungsgemäße mehrschichtige Kunststoffrohr wird in der Regel ein fluides Medium, insbesondere Kraftstoff geleitet.

Mehrschichtige Kunststoffrohre der vorstehend genannten Art werden normalerweise durch Koextrusion erzeugt. Die Schichten des mehrschichtigen Kunststoffrohres sind rohrförmig bzw. zylinderförmig ausgebildet. Die Haftung zwischen einzelnen Schichten kann durch zwischengeschaltete Haftvermittlerschichten erhöht werden.

Mehrschichtige Kunststoffrohre der eingangs beschriebenen Art sind aus der Praxis grundsätzlich bekannt. Diese Kunststoffrohre weisen in der Regel zumindest eine Trägerschicht aus einem Trägerkunststoff auf. Eine solche Trägerschicht bestimmt die mechanische Festigkeit des Kunststoffrohres und bildet gleichsam ein tragendes Element des Rohres. Der Trägerkunststoff garantiert insbesondere auch wesentliche mechanische Eigenschaften des Rohres wie die Kaltschlagzähigkeit, Dehnung, Berstdruck, Flexibilität und Temperaturbeständigkeit des Rohrverbundes. Die Trägerschicht oder die Trägerschichten der bekannten Kunststoffrohre bestehen vornehmlich aus Polyamid, beispielsweise aus Polyamid 12. Die aus der Praxis bekannten Kunststoffrohre weisen fernerhin eine Sperrschicht aus einem Sperrschichtkunststoff auf. Die Sperrschicht dient als Diffusionsbarriere für das in dem Rohr transportierte fluide Medium. Durch die Sperrschicht soll beispielsweise die Permeation von Kohlenwasserstoffen aus dem transportierten fluiden Medium reduziert werden. Als Sperrschichtkunststoffe werden beispielsweise Polyester wie Polyethylenterephthalat (PET) oder Polybutylenterephthalat (PBT) eingesetzt oder es werden beispielsweise Ethylen-Vinylalkohol-Copolymer (EVOH) oder Polyvinylidenfluorid (PVDF) oder Ethylen-Tetrafluorethylen-Copolymer (ETFE) verwendet. Eventuell werden zwischen den einzelnen Schichten Haftvermittlerschichten zwischengeschaltet um den Zusammenhalt des Laminatverbundes zu garantieren. Die aus der Praxis bekannten mehrschichtigen Kunststoffrohre zeichnen sich durch den Nachteil aus, dass die Barrierewirkung stark vom Typ des verwendeten Kraftstoffes abhängt. Deshalb kann mit einem Rohr nicht für alle Kraftstoffe eine optimale Barrierewirkung erzielt werden. Oft kann mit so einem bekannten Kunststoffrohr die Permeationsreduktion nur bezüglich bestimmter in den Medien enthaltener Komponenten erfolgreich sichergestellt werden, während andere Komponenten in unerwünschter Weise eine höhere Diffusion aufweisen. So kommt es vor, dass ein bestimmtes mehrschichtiges Kunststoffrohr bzw. eine mehrschichtige Kraftstoffleitung bei manchen Kraftstoffen zufriedenstellende Barriereeigenschaften, bei anderen Kraftstoffen aber nur unzureichende Barriereeigenschaften aufweist. Das führte bislang dazu, dass für unterschiedliche Länder mit verschiedenen landesüblichen Kraftstoffen auch unterschiedliche Kraftstoffsysteme bzw. unterschiedliche Kraftstoffleitungen hergestellt wurden. Das ist natürlich aufwendig bzw. kostenaufwendig. Außerdem ist nicht gewährleistet, dass das Fahrzeug mit dem bestimmten Kraftstoffsystem stets nur in dem Ursprungsland bewegt wird. Die bislang bekannten mehrschichtigen Kunststoffrohre bzw. Kraftstoffleitungen sind also verbesserungsbedürftig.

Aus WO 03/028995 A1 ist ein mehrschichtiges Rohr mit einer Schicht aus einem Fluorelastomer und mit einer Sperrschicht bekannt. Das Rohr weist auch eine äußere Trägerschicht auf. Die Sperrschicht kann aus Ethylen-Vinylalkohol-Copolymer (EVOH) bestehen.

Fernerhin ist aus EP 0 650 004 A1 ein Kunststoffrohr mit verbesserter Beständigkeit unter anderem gegen methanolhaltige Kraftstoffe und mit verbesserten mechanischen Eigenschaften beschrieben. Das hier beschriebene Mehrschichtrohr weist eine Außenschicht aus Polyamid und eine zu der Außenschicht benachbarte Zwischenschicht aus Polyester auf. Außerdem sind zwei weitere Zwischenschichten auf Basis von Polyamid vorgesehen und eine Innenschicht aus einer Formmasse auf Basis von Polyvinylidenflourid (PVDF). - Auch aus EP 0 637 509 A1 ist eine mehrschichtige Rohrleitung bzw. Kraftstoffrohrleitung bekannt. Diese Kraftstoffleitung weist eine Außenschicht auf, die aus einem Polyolefin, einem Polyamid, einem Fluorpolymer oder einem Polyester bestehen kann. An diese Außenschicht schließt eine Zwischenschicht aus einem Polyalkennaphthalat an. Weiterhin ist eine Innenschicht aus einem Polyamid oder aus einem Fluorpolyamid vorhanden. Innenschicht und Zwischenschicht werden über eine Haftvermittlerschicht aus einem Fluorpolymer verbunden.

Der Erfindung liegt das technische Problem zugrunde, ein mehrschichtiges Kunststoffrohr bzw. eine mehrschichtige Kraftfahrzeugleitung der eingangs genannten Art anzugeben, bei der auf einfache Weise eine Verbesserung der Barriereeigenschaften auch im Hinblick auf die Verwendung unterschiedlicher bzw. landestypischer Kraftstoffe erreicht wird.

Zur Lösung dieses technischen Problems lehrt die Erfindung ein mehrschichtiges Kunststoffrohr, insbesondere eine mehrschichtige Kraftfahrzeugrohrleitung, nach Patentanspruch 1.
Wie oben bereits dargelegt wird das mehrschichtige Kunststoffrohr in der Regel durch Koextrusion erzeugt und die Schichten des mehrschichtigen Kunststoffrohres sind rohrförmig bzw. zylinderförmig aufgebaut. Diese Schichten liegen normalerweise formschlüssig und stoffschlüssig aneinander an. Um den Verbund der Schichten zu verbessern können Haftvermittlerschichten zwischengeschaltet sein.

Wie oben bereits dargelegt bestimmt die Trägerschicht bzw. der Trägerkunststoff der Trägerschicht weitestgehend die mechanische Festigkeit des mehrschichtigen Kunststoffrohres. Erfindungsgemäß ist der Trägerkunststoff ein Polyamid oder ein Blend mit einem Polyamid. Als Trägerkunststoffe kommen vorzugsweise Polyamid 12, Polyamid 6 und deren Blends in Frage. Nach besonders bevorzugter Ausführungsform der Erfindung bildet eine Trägerschicht aus einem Trägerkunststoff die Außenschicht des Kunststoffrohres.

Sperrschicht meint im Rahmen der Erfindung eine Schicht, die die Permeation von Kohlenwasserstoffen oder von alkoholischen Komponenten aus dem transportierten fluiden Medium reduziert. Erfindungsgemäß besteht die erste äußere Sperrschicht des erfindungsgemäßen mehrschichtigen Kunststoffrohres aus "Ethylen-Vinylalkohol-Copolymer (EVOH). Erfindungsgemäß besteht die zweite innere Sperrschicht aus Polyvinylidenfluorid (PVDF) oder Ethylen-Tetrafluorethylen-Copolymer (ETFE)".

Vorzugsweise ist eine weitere Trennschicht aus zumindest einem Haftvermittler zwischen den beiden Sperrschichten angeordnet. Der Haftvermittler besteht beispielsweise aus Polyolefin, bevorzugt aus Polyethylen oder aus Polypropylen. Erfindungsgemäß ist eine Trennschicht aus einem Polyamid oder einem Blend mit Polyamid zwischen den beiden Sperrschichten angeordnet. Zweckmäßigerweise besteht die Trennschicht aus Polyamid 12 oder Polyamid 6 oder deren Blends. Eine Ausführungsform der Erfindung ist dadurch gekennzeichnet, dass eine Trennschicht aus einem Haftvermittler und eine Trennschicht aus einem Polyamid zwischen den beiden Sperrschichten des erfindungsgemäßen mehrschichtigen Kunststoffrohres angeordnet ist.

Apolare Medien meint im Rahmen der Erfindung ein fluides Medium, beispielsweise einen Kraftstoff mit zumindest einer apolaren Komponente. Bei dem ersten Sperrschichtkunststoff mit höherer Barrierewirkung gegenüber apolaren Medien handelt es sich um Ethylen-Vinylalkohol-Copolymer (EVOH). Bei dem zweiten Sperrschichtkunststoff mit im Vergleich zum ersten Sperrschichtkunststoff geringerer Barrierewirkung gegenüber apolaren Medien handelt es sich dagegen um ein Polyvinylidenfluorid (PVDF) und/oder um Ethylen-Tetrafluorethylen-Copolymer (ETFE).

Eine Ausführungsform der Erfindung ist dadurch gekennzeichnet, dass die Innenschicht des Kunststoffrohres eine Sperrschicht ist, die aus einem Sperrschichtkunststoff besteht. Innenschicht meint hier und nachfolgend die mediumseitige Innenschicht, das heißt die innere Schicht des Kunststoffrohres, die von dem transportierten fluiden Medium unmittelbar beaufschlagt wird. Wenn nach dieser Ausführungsform die Innenschicht eine Sperrschicht ist, besteht diese Sperrschicht aus einem Sperrschichtkunststoff mit hoher Barrierewirkung gegenüber alkoholhaltigen Medien, nämlich aus Polyvinylidenfluorid (PVDF) oder Ethylen-Tetrafluorethylen-Copolymer (ETFE).

Bei einer besonders bevorzugten Ausführungsform des erfindungsgemäßen Kunststoffrohres sind eine Außenschicht aus einem Polyamid, eine äußere Sperrschicht und eine innere Sperrschicht vorgesehen, wobei äußere und innere Sperrschicht durch zumindest eine erste Trennschicht aus einem Haftvermittler und zumindest eine zweite Trennschicht aus einem Polyamid getrennt sind. Vorzugsweise ist zwischen den beiden Sperrschichten lediglich eine einzige erste Trennschicht aus einem Haftvermittler und eine einzige zweite Trennschicht aus einem Polyamid vorgesehen.

Es liegt im Rahmen der Erfindung, dass die Außenschicht und die äußere Sperrschicht des Kunststoffrohres durch zumindest eine Zwischenschicht, vorzugsweise durch zumindest eine Zwischenschicht aus einem Haftvermittler getrennt sind. Als Haftvermittler wird im Rahmen der Erfindung beispielsweise ein Polyolefin, vorzugsweise Polyethylen oder Polypropylen eingesetzt.

Eine bevorzugte Ausführungsform ist dadurch gekennzeichnet, dass die Innenschicht mit zumindest einer leitfähigen Substanz versehen ist. Bei der leitfähigen Substanz mag es sich vorzugsweise um Leitruß oder um Grafitfibrillen handeln. Durch die Leitfähigkeit der Innenschicht werden unerwünschte elektrostatische Aufladungen und plötzliche Entladungen mit eventueller Explosionsfolge effektiv vermieden.

Der Erfindung liegt die Erkenntnis zugrunde, dass mit einem erfindungsgemäßen mehrschichtigen Kunststoffrohr eine überraschend hohe Barrierewirkung gegenüber verschiedenen Komponenten in dem transportierten fluiden Medium erreicht werden kann. Von besonderem Vorteil ist im Rahmen der Erfindung, dass die Rohrleitung weitgehend unabhängig vom verwendeten fluiden Medium bzw. vom verwendeten Kraftstoff eingesetzt werden kann. Grundsätzlich lässt sich auf einfache Weise eine optimale Barrierewirkung bei unterschiedlichsten Kraftstoffen erzielen. Das hat zur Folge, dass eine erfindungsgemäße Kraftstoffleitung auch in verschiedenen Ländern, in denen unterschiedliche Kraftstoffe benutzt werden, mit gleicher Barrierewirkung eingesetzt werden kann. Folglich entfällt die aufwendige Herstellung unterschiedlicher Kraftstoffsysteme für verschiedene Länder. Im Ergebnis bringt die Erfindung somit beachtliche Vorteile.

Nachfolgend wird die Erfindung anhand von Ausführungsbeispielen näher erläutert. Es wird jeweils die Schichtenfolge von verschiedenen erfindungsgemäßen Kunststoffrohren von außen nach innen angegeben. Die Abkürzung PA steht dabei für ein Polyamid oder für ein Blend eines Polyamides mit zumindest einem anderen Polymer. Insbesondere wenn Polyamid die Außenschicht des Kunststoffrohres bildet, kann es sich auch um ein Blend zumindest eines Polyamides mit zumindest einem anderen Polymer handeln. Die Abkürzung HV steht für Haftvermittler. Die Abkürzung EVOH kennzeichnet Ethylen-Vinylalkohol-Copolymer. Mit der Abkürzung ETFE ist Ethylen-Tetrafluorethylen-Copolymer gemeint. Die Abkürzung PVDF steht für Polyvinylidenfluorid. Wenn hinter dem Kunststoff der Innenschicht (If) aufgeführt ist meint dies, dass diese Innenschicht mit einer leitfähigen Substanz versetzt worden ist, beispielsweise mit Leitruß. - In den vier ersten Ausführungsbeispielen besteht jeweils eine Sperrschicht aus Ethylen-Vinylalkohol-Copolymer (EVOH), das eine hohe Barrierewirkung gegenüber apolaren Medien hat und eine Sperrschicht entweder aus Ethylen-Tetrafluorethylen-Copolymer (ETFE) oder aus Polyvinylidenfluorid (PVDF), die beide eine hohe Barrierewirkung gegenüber Alkoholen, insbesondere gegenüber Methanol haben. Die letztgenannte Sperrschicht entfaltet also insbesondere eine Barrierewirkung gegenüber alkoholhaltigen bzw. methanolhaltigen Kraftstoffen. Die Schichtenfolge wird von außen nach innen angegeben:
1. PA / HV / EVOH / HV / PA / ETFE
2. PA / HV / EVOH / HV / PA / ETFE (lf)
3. PA / HV / EVOH / HV / PA / PVDF
4. PA / HV / EVOH / HV / PA / PVDF (lf)

Grundsätzlich liegt es im Rahmen der Erfindung, dass die Außenschicht, die aus Polyamid oder einem Blend mit Polyamid besteht, zusätzlich von einer äußeren Schutzschicht ummantelt ist, die aus einem thermoplastischen Elastomer (TPE) bzw. aus einem thermoplastischen Polyurethan (TPU) bestehen kann. Diese zusätzliche Schutzschicht stellt eine Beständigkeit gegenüber hohen Umgebungstemperaturen, beispielsweise gegenüber Temperaturen größer als 130°C sicher. Die zusätzliche Schutzschicht kann mit den übrigen Schichten koextrudiert werden und wird damit Bestandteil des Laminatverbundes des mehrschichtigen Kunststoffrohres.

## Patentansprüche

1. Mehrschichtiges Kunststoffrohr, insbesondere mehrschichtige Kraftfahrzeugrohrleitung, - mit der Schichtenfolge von außen nach innen:
eine Trägerschicht aus einem Polyamid oder einem Blend mit einem Polyamid,
eine erste äußere Sperrschicht aus zumindest einem Sperrschichtkunststoff aus der Gruppe "Ethylen-Vinylalkohol-Copolymer (EVOH), Polyvinylidenfluorid (PVDF), Ethylen-Tetrafluorethylen-Copolymer (ETFE)",
zumindest eine Trennschicht aus einem Polyamid oder einem Blend mit einem Polyamid und
eine zweite innere Sperrschicht aus zumindest einem Sperrschichtkunststoff aus der Gruppe "Ethylen-Vinylalkohol-Copolymer (EVOH), Polyvinylidenfluorid (PVDF), Ethylen-Tetrafluorethylen-Copolymer (ETFE)",
wobei die erste Sperrschicht aus einem ersten Sperrschichtkunststoff mit höherer Barrierewirkung gegenüber apolaren Medien und die zweite Sperrschicht aus einem zweiten Sperrschichtkunststoff mit im Vergleich zum ersten Sperrschichtkunststoff geringerer Barrierewirkung gegenüber apolaren Medien besteht,
wobei die erste äußere Sperrschicht aus Ethylen-Vinylalkohol-Copolymer (EVOH) besteht und
wobei die zweite innere Sperrschicht aus Polyvinylidenfluorid (PVDF) oder Ethylen-Tetrafluorethylen-Copolymer (ETFE) besteht.

2. Mehrschichtiges Kunststoffrohr nach Anspruch 1, wobei eine weitere Trennschicht aus zumindest einem Haftvermittler zwischen den beiden Sperrschichten angeordnet ist.

3. Mehrschichtiges Kunststoffrohr nach einem der Ansprüche 1 oder 2, wobei die Innenschicht des Rohres eine Sperrschicht ist, die aus einem Sperrschichtkunststoff besteht.

4. Mehrschichtiges Kunststoffrohr nach einem der Ansprüche 1 bis 3, wobei eine Außenschicht aus einem Polyamid vorgesehen ist und wobei die erste und die zweite Sperrschicht durch zumindest eine erste Trennschicht aus einem Haftvermittler und zumindest eine zweite Trennschicht aus einem Polyamid getrennt sind.

5. Mehrschichtiges Kunststoffrohr nach einem der Ansprüche 1 bis 4, wobei die Außenschicht und die erste Sperrschicht durch zumindest eine Zwischenschicht, vorzugsweise aus einem Haftvermittler getrennt sind.

6. Mehrschichtiges Kunststoffrohr nach einem der Ansprüche 1 bis 5, wobei die Innenschicht mit zumindest einer leitfähigen Substanz versehen ist.

## Claims

1. A multilayer plastic pipe, in particular a multilayer motor vehicle pipeline, with the following layer sequence from the outside to the inside:
a carrier layer composed of a polyamide or a blend with a polyamide,
a first outer barrier layer composed of at least one barrier layer plastic from the group "ethylene-vinyl alcohol copolymer (EVOH), polyvinylidene fluoride (PVDF), ethylene-tetrafluoroethylene copolymer (ETFE)",
at least one separating layer composed of a polyamide or a blend with a polyamide, and
a second inner barrier layer composed of at least one barrier layer plastic from the group "ethylene-vinyl alcohol copolymer (EVOH), polyvinylidene fluoride (PVDF), ethylene-tetrafluoroethylene copolymer (ETFE)",
wherein the first barrier layer consists of a first barrier layer plastic with a higher barrier effect against apolar media, and the second barrier layer consists of a second barrier layer plastic with a lower barrier effect against apolar media in comparison to the first barrier layer plastic,
wherein the first outer barrier layer consists of ethylene-vinyl alcohol copolymer (EVOH), and
wherein the second inner barrier layer consists of polyvinylidene fluoride (PVDF) or ethylene-tetrafluoroethylene copolymer (ETFE).

2. The multilayer plastic pipe according to claim 1, wherein another separating layer composed of at least one adhesion promoter is arranged between the two barrier layers.

3. The multilayer plastic pipe according to one of claims 1 or 2, wherein the inner layer of the pipe is a barrier layer that consists of a barrier layer plastic.

4. The multilayer plastic pipe according to one of claims 1 to 3, wherein an outer layer composed of a polyamide is provided, and wherein the first and the second barrier layer are separated by at least one first separating layer composed of an adhesion promoter and at least one second separating layer composed of a polyamide.

5. The multilayer plastic pipe according to one of claims 1 to 4, wherein the outer layer and the first barrier layer are separated by at least one intermediate layer, preferably composed of an adhesion promoter.

6. The multilayer plastic pipe according to one of claims 1 to 5, wherein the inner layer is provided with at least one conductive substance.

## Revendications

1. Tube multicouche en matière plastique, en particulier conduite tubulaire multicouche pour véhicule automobile, comportant la succession de couches suivante, de l'extérieur vers l'intérieur :
une couche de support, réalisé dans un polyamide ou un mélange comportant un polyamide,
une première couche de barrière extérieure, réalisée en au moins une matière plastique formant couche de barrière et appartenant au groupe "Copolymère d'éthylène / alcool vinylique (EVOH), polyfluorure de vinylidène (PVDF), copolymère d'éthylène /tétrafluoroéthylène (ETFE)",
au moins une couche de séparation, réalisée en un polyamide ou un mélange comportant un polyamide et
une deuxième couche de barrière intérieure réalisée en au moins une matière plastique formant couche de barrière et appartenant au groupe "Copolymère d'éthylène / alcool vinylique (EVOH), polyfluorure de vinylidène (PVDF), copolymère d'éthylène /tétrafluoroéthylène (ETFE)",
sachant que la première couche de barrière est constituée en une première matière plastique formant couche de barrière avec un effet barrière plus important vis-à-vis des milieux apolaires et la deuxième couche de barrière constituée en une deuxième matière plastique formant couche de barrière en comparaison de la première matière plastique formant couche de barrière avec un effet de barrière moins important vis-à-vis des milieux apolaires,
sachant que la première couche de barrière extérieure est réalisée en copolymère d'éthylène / alcool vinylique (EVOH) et
sachant que la deuxième couche de barrière intérieure est réalisée en un polyfluorure de vinylidène (PVDF) ou un copolymère d'éthylène/tértrafluoroéthylène (ETFE).

2. Tube multicouche en matière plastique selon la revendication 1, sachant qu'une autre couche de séparation réalisée en au moins un promoteur d'adhérence, est disposée entre les deux couches de barrière.

3. Tube multicouche en matière plastique selon l'une quelconque des revendications 1 ou 2, sachant que la couche intérieure du tube est une couche de barrière, qui est composée d'une matière plastique formant couche de barrière.

4. Tube multicouche en matière plastique selon l'une quelconque des revendications 1 à 3, sachant qu'une couche extérieure réalisée en un polyamide est prévue et sachant que la première et la deuxième couche de barrière sont séparées par au moins une première couche de séparation réalisée en un promoteur d'adhérence et au moins une deuxième couche de séparation en un polyamide.

5. Tube multicouche en matière plastique selon l'une quelconque des revendications 1 à 4, sachant que la couche extérieure et la première couche de barrière sont séparées par une couche intermédiaire, de préférence en un promoteur d'adhérence.

6. Tube multicouche en matière plastique selon l'une quelconque des revendications 1 à 5, sachant que la couche intérieure est dotée d'au moins une substance conductrice.
